# EUROPÄISCHE PATENTANMELDUNG

(11) **EP 1 367 271 A1**
(43) Veröffentlichungstag der Anmeldung: **03.12.2003**
(21) Anmeldenummer: 03011089.4
(22) Anmeldetag: 21.05.2003
(51) Int. Cl.: F16B 37/04

(54) **In ein Loch einer Platte einsetzbares Klemmstück**

(30) Priorität: 28.05.2002 DE 10223747
(71) Anmelder: EJOT GmbH & Co. KG, 57334 Bad Laasphe (DE)
(72) Erfinder: Dieckmann, Volker, 57319 Bad Berleburg (DE); Grotmann, Dieter, Dr., 57339 Erndtebrück (DE); Hau, Peter, 61184 Karben (DE)
(74) Vertreter: Bardehle, Heinz, Dipl.-Ing.

(57) **Zusammenfassung**

Die Erfindung betrifft ein in ein Loch (27) einer Platte (21) einsetzbares Klemmstück mit einem Halteteil (1) und einem sich an der Platte (21) abstützenden Widerlager (2) sowie mit zwei Klemmflügeln (3,4), die jeweils mit zwei Schenkeln (5,6,7,8) V-förmig gestaltet und an ihren Scheiteln durch ein Filmscharnier (9,10) verbunden sind, das bei gespreizten Schenkeln (6,7,8,9) den Einsatz des Halteteils (1) in das Loch (27) ermöglicht und bei einander angenäherten Schenkeln (6,7,8,9) sich hinter die Platte (21) auf deren dem Widerlager (2) abgewandten Seite setzt, wobei jeweils über eine Biegezone (22,23,24,25) der eine Schenkel (5,6,7,8) jedes Klemmflügels (3,4) mit dem Halteteil (1) und der andere Schenkel (5,6,7,8) mit dem Widerlager (2) verbunden ist. Das Halteteil (1) ist als Mutterteil zur Aufnahme einer Schraube (28) ausgebildet, das Halteteil (1) und das Widerlager (2) sind mit zueinander passenden Rastelementen (13,14,15,16) versehen, die den eingerasteten Zustand einnehmen, wenn das Widerlager (2) an der einen Seite der Platte (21) und die mit dem Widerlager (2) verbundenen Schenkel (5,6,7,8) des Klemmflügels (3,4) an der anderen Seite der Platte (21) anliegen.

## Beschreibung

Die Erfindung bezieht sich auf ein in ein Loch einer Platte einsetzbares Klemmstück mit einem Halteteil und einem sich an der Platte abstützenden Widerlager sowie mit zwei Klemmflügeln, die jeweils mit zwei Schenkeln V-förmig gestaltet und an ihren Scheiteln durch ein Filmschamier verbunden sind, das bei gespreizten Schenkeln den Einsatz des Halteteils in das Loch ermöglicht und bei einander angenäherten Schenkeln sich hinter die Platte auf deren dem Widerlager abgewandten Seite setzt, wobei jeweils über eine Biegezone der eine Schenkel jedes Klemmflügels mit dem Halteteil und der andere Schenkel mit dem Widerlager verbunden ist.

Ein derartiges Klemmstück ist in der europäischen Patentanmeldung 1 081 395 A1 beschrieben, das zur Anbringung eines Hakens im Innenraum einer Kraftfahrzeugkarosserie vorgesehen und in ein Loch in einem Karosserieteil einsteckbar und in diesem verrastbar ist. Hierzu wird das Klemmstück mit seinem Halteteil in das Loch eingeführt, wobei sich unter dem Druck auf das Widerlager die beiden Klemmflügel zu beiden Seiten des Halteteils mit ihren Filmscharnieren vom Halteteil weg bewegen und damit hinter das Karosserieteil setzen, womit die Klemmflügel eine Rückwärtsbewegung des Klemmstücks von dem Karosserieteil weg verhindern. Damit wird das Klemmstück gegenüber dem Karosserieteil einerseits durch die nach außen ausgefalteten Klemmflügel und andererseits durch den mit dem Klemmstück einstückig verbundenen aufgerasteten Haken gehindert, womit also die Anbringung des Hakens die Bedingung für eine sichere Befestigung des Klemmstücks an dem Karosserieteil ist.

Der Erfindung liegt die Aufgabe zugrunde, die Sicherung der Halterung des Klemmstücks an einer Platte zu vereinfachen. Erfindungsgemäß geschieht das dadurch, dass das Halteteil als Mutterteil zur Aufnahme einer Schraube ausgebildet ist und das Halteteil und das Widerlager mit zueinander passenden Rastelementen versehen sind, die den eingerasteten Zustand einnehmen, wenn das Widerlager an der einen Seite der Platte und die mit dem Widerlager verbundenen Schenkel des Klemmflügels an der anderen Seite der Platte anliegen.

Die Konzentration der Rastelemente auf das Halteteil und das Widerlager, die über die beiden Klemmflügel verbunden sind, lässt eine Arretierung des in das Loch einer Platte eingesetzten Klemmstücks ohne die Zuhilfenahme weiterer Bauteile direkt zu, so dass die Anbringung des Klemmstücks an der Platte auf besonders einfache Weise möglich ist, nämlich durch Einführen des Klemmstücks mit dem Halteteil voran, bis sich das Klemmstück mit seinem Widerlager an der Platte abstützt, worauf das Halteteil unter Ausfaltung der Klemmflügel zurückgezogen wird, bis die an Mutterteil und Widerlager vorgesehenen Rastelemente ineinander einrasten.

Aufgrund der Ausfaltung der Klemmflügel im eingerasteten Zustand der Rastelemente drücken das Widerlager auf der einen Seite der Platte und die Klemmflügel auf der anderen Seite der Platte sich an diese an, womit das Klemmstück zwar unverlierbar mit der Platte verbunden ist, aufgrund des beschränkten Drucks von Widerlager und Klemmflügeln gegen die Platte aber gegenüber der Platte verschiebbar bleibt, soweit die Maße des Lochs in der Platte eine Verschiebung erlauben. Hierdurch wird ein Ausgleich von Toleranzen (z.B. aufgrund von Temperaturschwankungen) ermöglicht, da das Klemmstück je nach Lage von damit gegebenenfalls zu verbindenden weiteren Bauteilen von diesen gegenüber der Platte jeweils ausgerichtet werden kann. Auf die Verwendung des Klemmstücks z.B. zur Verwendung mit weiteren Bauteilen wird weiter unten näher eingegangen.

Die Rastelemente am Halteteil und am Widerlager gestaltet man zweckmäßig so, dass es sich dabei um Rastnasen handelt, die in Rastlöcher passen, wobei die Rastnasen entweder am Mutterteil angebracht oder dem Widerlager zugeordnet sind. Hierzu wird das Widerlager mit Lappen versehen, an denen entweder die Rastnasen oder die Rastlöcher angebracht sind.

Das Klemmstück lässt sich in vorteilhafter Weise auch als Kunststoffmutter verwenden, wozu das Halteteil mit einer Bohrung für die Aufnahme einer Schraube und das Widerlager mit einem Durchbruch für den Durchgang der Schraube versehen ist. Das an einer Platte angebrachte Klemmstück kann dann dazu dienen, irgendwelche weiteren Bauteile an der Platte unter Ausnutzung des Klemmstücks als Kunststoffmutter anzuschrauben.

Um dem mit der Bohrung versehenen Halteteil beim Anziehen der Schraube eine feste Begrenzung zu geben, gibt man zweckmäßig dem Halteteil auf seiner dem Widerlager zugewandten Seite einen in eine Aussparung im Widerlager passenden Anschlag, der im eingerasteten Zustand an einem anzuschraubenden Bauteil anliegt und damit beim Anziehen der Schraube die Zusammenführung von Halteteil und Widerlager begrenzt. Zweckmäßig bildet die dem Widerlager zugewandte Fläche des Halteteils den Anschlag.

Um die bei der Bewegung der Schenkel im Zuge der Filmscharniere auftretenden Spannungen in Grenzen zu halten, gestaltet man das Filmscharnier zweckmäßig so, dass dieses eine Biegezone bildet, die durch Übergänge zunehmender Stärke mit den Schenkeln verbunden sind. Auf diese Weise wird erreicht, dass auch die Übergänge auftretende Spannungen mit übernehmen können und diese Spannungen damit ggf. gleichmäßig verteilt werden. Wenn man den beiden Übergängen eines Filmscharniers unterschiedliche Längen gibt, erzielt man vorteilhaft den Effekt, dass bei dem Andrücken des Halteteils in Richtung Widerlager die beiden Schenkel des Filmscharniers sich mit Sicherheit nach außen hin ausfedern und sich nicht etwa durch den beim Druck in der vollkommen gespreizten Lage stauchen.

Die Dicke der Biegezonen in den Verbindungen der Schenkel zum Widerlager bzw. Halteteil gestaltet man zweckmäßig so, dass diese zum Widerlager bzw. Halteteil hin abnimmt Damit erreicht man eine wahlweise gewünschte Anpassung der auftretenden Biegespannungen an den betreffenden Enden der Schenkel, womit sich deren Verhalten bei der Bewegung der Klemmflügel zur ausgespreizten und zur zusammengefalteten Lage bzw. umgekehrt in jeweils gewünschter Weise beeinflussen lässt.

Zweckmäßig versieht man die Schenkel jeweils eines Klemmflügels auf ihren einander zugewandten Seiten mit einander angepassten Vorsprüngen, die in eingesetzter Lage eine zum Filmscharnier gerichtete Verschiebung der Schenkel gegeneinander blockieren. Hierdurch wird erreicht, dass sich beim Zusammenfalten der Klemmflügel die betreffenden Schenkel nicht so gegeneinander verschieben können, dass dabei auf das die beiden Schenkel verbindende Filmscharnier zu hohe Zuck- bzw. Druckkräfte ausgeübt werden.

Den dem Halteteil zugewandten Schenkel eines Klemmflügels bildet man zweckmäßig länger aus als den anderen Schenkel. Hierdurch ergibt sich eine erhöhte Widerstandskraft des zusammengefalteten Klemmflügels gegen ein Auseinanderziehen von Widerlager und Halteteil.

Um ein aus Kunststoff bestehendes Klemmstück auch höheren Temperaturen aussetzen zu können, ohne dass Relaxation eintritt, gestaltet man es zweckmäßig so, dass der dem Halteteil zugewandte Schenkel eines Klemmflügels und das Halteteil aus einem Material bestehen, das temperaturbeständiger ist als das Material des anderen Schenkels.

In den Figuren sind Ausführungsbeispiele der Erfindung dargestellt. Es zeigen:
- Figur 1: das Klemmstück in perspektivischer Sicht,
- Figur 2: das Klemmstück in Seitensicht,
- Figur 3: einen Schnitt durch das Klemmstück gemäß Figur 2 entlang der Linie III-III,
- Figur 4: das Klemmstück beim Einsetzen in das Loch einer Platte,
- Figur 5: das Klemmstück eingesetzt in die Platte,
- Figur 6: das Klemmstück mit verrastetem Halteteil und Widerlager,
- Figur 7: eine besondere Ausbildung des Klemmflügels,
- Figur 8: die Schenkel eines Klemmflügels mit Vorsprüngen zur Verriege^ lung der Schenkel.

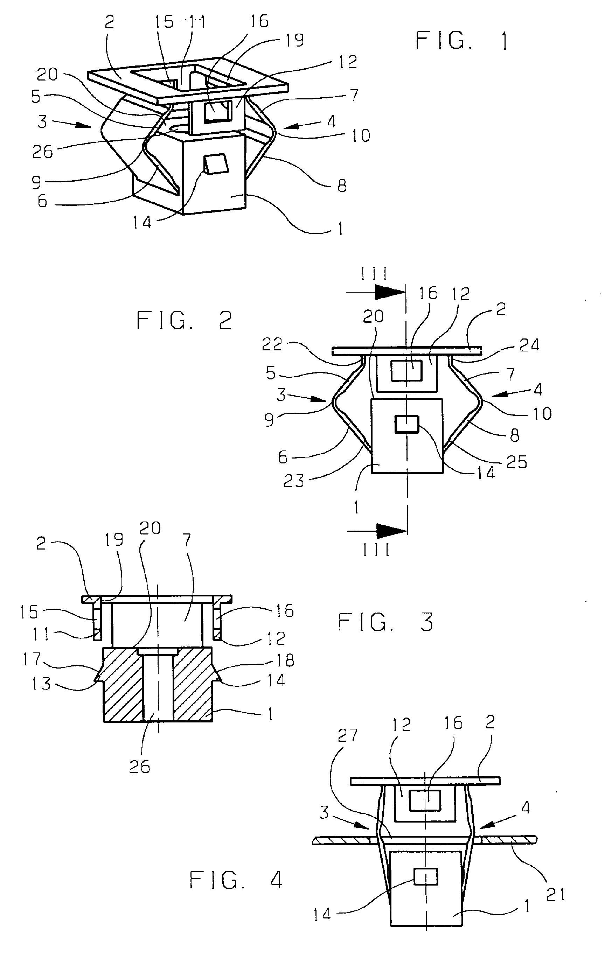

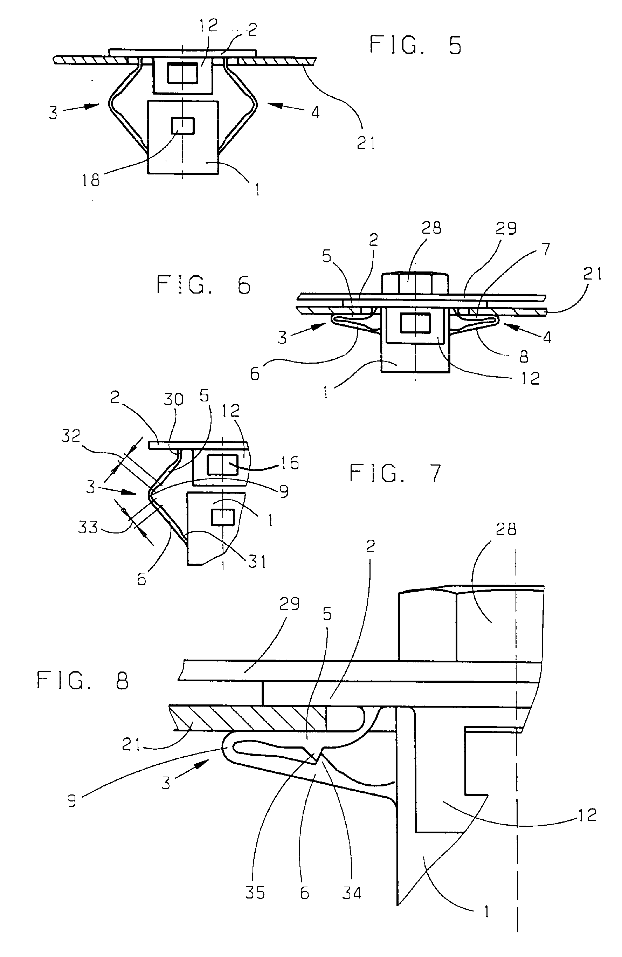

Figur 1 zeigt das Klemmstück in perspektivischer Sicht, bestehend aus dem Halteteil 1, dem Widerlager 2 sowie den beiden Klemmflügeln 3 und 4, von denen der Klemmflügel 3 die beiden Schenkel 5 und 6 und der Klemmflügel 4 die beiden Schenkel 7 und 8 enthält. Die Schenkel 5 und 7 sind mit dem Widerlager 2 verbunden, und zwar an dessen in der Figur 1 nicht sichtbarer Unterseite (siehe Figur 2), die Schenkel 6 und 8 mit dem Halteteil 1. Die Schenkel 5 und 6 bzw. 7 und 8 sind zusammen jeweils V-förmig gestaltet und können sowohl zusammengefaltet als auch voll gespreizt werden (siehe Figuren 4 und 6), was dadurch ermöglicht wird, dass die Schenkel 5 und 6 an ihrem Scheitel über das Filmscharnier 9 und die Schenkel 7 und 8 an ihrem Scheitel über das Filmscharnier 10 miteinander verbunden sind. Die jeweiligen Verbindungsstellen der Schenkel 5, 6, 7 und 8 mit dem Widerlager 2 bzw. dem Halteteil 1 sind als Biegezonen ausgebildet (siehe Figur 2), so dass sich die vorstehend erwähnte Beweglichkeit der Klemmflügel 3 und 4 ergibt.

Aus dem Widerlager 2 ragen in Richtung Halteteil 1 die Lappen 11 und 12 heraus, die so angeordnet sind, dass sie seitlich an dem Halteteil vorbeistreifen, wenn das Halteteil 1 in Richtung auf das Widerlager 2 gedrückt wird (die zusammengedrückte Lage ist in Figur 6 dargestellt). Dabei umfassen die Lappen 11 und 12 das Halteteil 1 seitlich. Es sorgen die am Halteteil angebrachten Rastnasen 13 und 14 (siehe Figur 3) im Zusammenwirken mit entsprechenden Rastlöchern 15 und 16 in den Lappen 11 und 12 dafür, dass in zusammengedrückter Lage von Halteteil 1 und Widerlager 2 (siehe Figur 6) diese beiden Teile miteinander verrastet sind. Dabei sorgen die Schrägflächen 17 und 18 an den Rastnasen 13 und 14 dafür (siehe Figur 3), dass sich die Lappen 15 und 16 über die Rastnasen 13 und 14 schieben können, wobei sich die Lappen 15 und 16 seitlich etwas wegbiegen, um dann nach vollständigem Einschieben des Halteteils 1 zwischen die Lappen 15 und 16 zurückzuschnappen und damit das Halteteil 1 in verrasteter Lage festzuhalten. Die Anbringung der Rastnasen und der Rastlöcher kann auch umgekehrt vorgenommen werden, wobei dann die Rastnasen an den Lappen und die Rastlöcher am Halteteil anzubringen sind.

Das Widerlager 2 besitzt den Durchbruch 19, in den beim Zusammendrücken von Halteteil 1 und Widerlager 2 das Halteteil 1 mit seiner dem Widerlager 2 zugewandten Fläche 20 hineinragt, wobei der Durchbruch 19 den betreffenden Abschnitt des Halteteils 1 aufnimmt. Damit wirkt die genannte Fläche 20 als Anschlag gegen ein Bauteil 29 (siehe Figur 6), worauf weiter unten näher eingegangen wird.

Figur 2 zeigt das Klemmstück mit seinem Halteteil 1 und seinem Widerlager 2 in Seitensicht, wobei die Verbindung dieser beiden Teile über die Klemmflügel 3 und 4 mit deren Schenkeln 5 und 6 sowie 7 und 8 deutlich sichtbar wird. Dabei werden die Verbindungsstellen der Schenkel 5 und 6 bzw. 7 und 8 zum Halteteil 1 bzw. Widerlager 2 durch die Biegezonen 22 und 23 bzw. 24 und 25 gebildet.

Figur 3 zeigt einen Schnitt links der Linie III-III aus Figur 2 durch das Klemmstück, wobei die in das Halteteil eingebrachte Bohrung 26 sichtbar wird, die zur Aufnahme einer Schraube dient, womit das Klemmstück den Charakter einer Kunststoffmutter erhält, wenn man Halteteil 1 und Widerlager 2 aus Kunststoff ausbildet, was eine bevorzugte Gestaltung darstellt. Die Bohrung 26 ist in der Figur 1 ebenfalls angedeutet.

In der Figur 4 ist das Klemmstück beim Einsetzen in das Loch 27 einer Platte 21 dargestellt, wozu die Klemmflügel 3 und 4 an das Halteteil 1 herangedrückt werden, so dass in dieser Lage das Klemmstück sich gerade durch das Loch 27 hindurchführen lässt. Das Einsetzen des Klemmstücks erfolgt in Richtung des eingezeichneten Pfeiles.

Dieser Vorgang des Einsetzens des Klemmstücks geht so lange vor sich, bis das Widerlager 2 zur Anlage an der Platte 21 kommt. Dabei nehmen die Klemmflügel 3 und 4 wieder ihre in der Figur 1 dargestellte Normallage ein.

Nunmehr wird unter Rückhalten des Widerlagers 2 das Halteteil 1 gegen das Widerlager 2 gedrückt, bis das Halteteil 1 durch den Durchbruch 19 (siehe Figuren 1 und 3) hindurch tritt und mit seiner in Figur 1 bezeichneten Fläche 20 gegen das Bauteil 29 anschlägt (siehe Figur 6). Bei dieser Andrückbewegung des Halteteils 1 gegen das Widerlager 2 falten sich die Klemmflügel 3 und 4 seitlich weg, wobei sie sich einander annähern und die Schenkel 5 und 7 sich an die Platte 21 anlegen. In dieser Lage rasten die Rastnasen 13 und 14 (siehe Figur 1 und 3) in die Rastlöcher 15 und 16 ein, womit das Klemmteil sicher verrastet an der Platte 21 befestigt ist.

In der in Figur 6 dargestellten Lage des Klemmstücks in Verbindung mit der Platte 21 bildet das Klemmstück mit seinem Halteteil 1 eine Kunststoffmutter, in die eine Schraube eingedreht werden kann, von der der Schraubenkopf 28 dargestellt ist. Das Schraubengewinde ragt dann in die in Figur 3 dargestellte Bohrung 26 des Halteteils 1 hinein und zieht dieses fest an das Widerlager 2 heran. Unter dem Kopf 28 der in das Halteteil 1 eingedrehten Schraube ist das Bauteil 29 dargestellt, das auf diese Weise an der Platte 21 mittels des Klemmstücks befestigt ist.

In der Figur 7 ist eine besondere Gestaltung der Schenkel der Klemmflügel dargestellt, wobei es sich hier um den Klemmflügel 3 mit den beiden Schenkeln 5 und 6 handelt. Weiterhin sind ausschnittsweise dargestellt das Widerlager 2, der Lappen 12 mit dem Rastloch 16 und das Halteteil 1 (siehe auch Darstellung in Figur 2).

Der Schenkel 5 geht über die Biegezone 30 in das Widerlager 2 über, wobei die Dicke der Biegezone 30 zum Halteteil 2 hin abnimmt. Eine entsprechende Gestaltung ist am Schenkel 6 vorgesehen, wo dieser über die Biegezone 31 in das Halteteil 1 übergeht. Auch hier nimmt die Dicke der Biegezone vom Schenkel 6 zum Halteteil 1 hin ab. Im Bereich des Scheitels 9 des Klemmflügels 3 sind in der dort ausgebildeten Biegezone zwei Übergänge vorgesehen, nämlich der Übergang 32 zum Schenkel 5 und der Übergang 33 zum Schenkel 6. Der Übergang 32 ist kürzer als der Übergang 33, womit sich im Bereich des Übergangs 33 eine vom Scheitel 9 ausgehende längere Biegezone in Richtung zum Schenkel 6 hin ergibt. Außerdem ist der Schenkel 6 länger als der Schenkel 5 ausgebildet. Dies führt dazu, dass sich der Schenkel 5 im Falle der Verrasterung des Klemmstücks mit einer Platte (siehe Figur 6) unter besonderem Druck gegen die Platte 2 anliegt.

In der Figur 8, die einen Ausschnitt aus der Figur 6 darstellt, ist eine besondere Gestaltung der Schenkel 5 und 6 des Klemmflügels 3 wiedergegeben, gemäß der die Schenkel 5 und 6 mit den Vorsprüngen von 34 und 35 versehen sind, die so angeordnet und gestaltet sind, dass im eingerasteten Zustand des Klemmteils, bei der also die beiden Schenkel 5 und 6 einander angenähert sind, die Vorsprünge 34 und 35 aneinander anliegen und eine Längsverschiebung der Schenkel 5 und 6 gegeneinander verhindern. Dadurch ergibt sich der Effekt, dass beim Annähern der beiden Schenkel 5 und 6 im Zuge des Zusammendrückens von Halteteil 1 und Widerlager 2 verhindert wird, dass dabei eine auf den Schenkel 6 nach außen hin wirkende Schubkraft von dem Vorsprung 35 des Schenkels 5 aufgefangen wird, so dass das Filmscharnier 9 entlastet wird. Würden nämlich die Vorsprünge 34 und 35 fehlen, so würde ein in Längsrichtung des Schenkels 6 wirkender Druck das Filmscharnier 9 nach außen drücken und dieses damit einer erheblichen Zugkraft aussetzen, dem dieses u.U. nicht gewachsen ist. Das Filmscharnier 9 wird also auf diese Weise vor einer extremen Belastung geschützt.

## Patentansprüche

1. In ein Loch (27) einer Platte (21) einsetzbares Klemmstück mit einem Halteteil (1) und einem sich an der Platte (21) abstützenden Widerlager (2) sowie mit zwei Klemmflügeln (3, 4), die jeweils mit zwei Schenkeln (5, 6; 7, 8) V-förmig gestaltet und an ihren Scheiteln durch ein Filmscharnier (9, 10) verbunden sind, das bei gespreizten Schenkeln (6, 7, 8, 9) den Einsatz des Halteteils (1) in das Loch (27) ermöglicht und bei einander angenäherten Schenkeln (6, 7, 8, 9) sich hinter die Platte (21) auf deren dem Widerlager (2) abgewandten Seite setzt, wobei jeweils über eine Biegezone (22, 23, 24, 25) der eine Schenkel (5, 6, 7, 8) jedes Klemmflügels (3, 4) mit dem Halteteil (1) und der andere Schenkel (5, 6, 7, 8) mit dem Widerlager (2) verbunden ist, **dadurch gekennzeichnet, dass** das Halteteil (1) als Mutterteil zur Aufnahme einer Schraube (28) ausgebildet ist und das Halteteil (1) und das Widerlager (2) mit zueinander passenden Rastelementen (13, 14, 15, 16) versehen sind, die den eingerasteten Zustand einnehmen, wenn das Widerlager (2) an der einen Seite der Platte (21) und die mit dem Widerlager (2) verbundenen Schenkel (5, 6, 7, 8) des Klemmflügels (3, 4) an der anderen Seite der Platte (21) anliegen.

2. Klemmstück nach Anspruch 1, **dadurch gekennzeichnet, dass** das Halteteil (1) Rastnasen (13, 14) aufweist, die in Rastlöcher (15, 16) passen, die in das Halteteil (1) seitlich erfassenden, aus dem Widerlager (2) herausragenden Lappen (11, 12) eingebracht sind.

3. Klemmstück nach Anspruch 1, **dadurch gekennzeichnet, dass** in das Halteteil (1) seitlich Rastlöcher (15, 16) eingebracht sind, in die Rastnasen (13, 14) passen, die an aus dem Widerlager (2) herausragenden Lappen (11, 12) hervorspringen.

4. Klemmstück nach einem der Ansprüche 1 bis 3, **dadurch gekennzeichnet, dass** das Halteteil (1) mit einer Bohrung (21) für die Aufnahme einer Schraube (28) und das Widerlager (2) mit einem Durchbruch (19) für den Durchgang der Schraube (28) versehen ist.

5. Klemmstück nach der Anspruch 4, **dadurch gekennzeichnet, dass** das Halteteil (1) auf seiner dem Widerlager (2) zugewandten Seite einen in einen Durchbruch (19) im Widerlager (2) passenden Anschlag (20) aufweist, der im eingerasteten Zustand an einem anzuschraubenden Bauteil (29) anliegt und damit beim Anziehen der Schraube (28) die Zusammenführung von Halteteil (1) und Widerlager (2) begrenzt.

6. Klemmstück nach Anspruch 5, **dadurch gekennzeichnet, dass** die dem Widerlager (2) zugewandte Fläche des Halteteils (1) den Anschlag (20) bildet.

7. Klemmstück nach einem der Ansprüche 1 bis 6, **dadurch gekennzeichnet, dass** das Filmscharnier (9, 10) eine Biegezone (22, 23, 24, 25) bildet, die durch Übergänge (32, 33) zunehmender Stärke mit den Schenkeln (5, 6, 7, 8) verbunden ist.

8. Klemmstück nach Anspruch 7, **dadurch gekennzeichnet, dass** die Übergänge (32, 33) eines Filmscharniers (9, 10) unterschiedliche Längen aufweisen.

9. Klemmstück nach einem der Ansprüche 1 bis 8, **dadurch gekennzeichnet, dass** die Dicke der Biegezonen (30, 31) in den Verbindungen der Schenkel (5, 6, 7, 8) zum Widerlager (2) bzw. Halteteil (1) hin abnimmt.

10. Klemmstück nach einem der Ansprüche 1 bis 9, **dadurch gekennzeichnet, dass** die Schenkel (5, 6, 7, 8) jeweils eines Klemmflügels (3, 4) auf ihren einander zugewandten Seiten mit einander angepassten Vorsprüngen (34, 35) versehen sind, die in eingesetzter Lage eine zum Filmscharnier (9, 10) gerichtete Verschiebung der Schenkel (5, 6, 7, 8) gegeneinander blockieren.

11. Klemmstück nach einem der Ansprüche 1 bis 10, **dadurch gekennzeichnet, dass** der dem Halteteil (1) zugewandte Schenkel (6, 8) eines Klemmflügels (3, 4) länger ist als der andere Schenkel (5, 7).

12. Klemmstück nach einem der Ansprüche 1 bis 11, **dadurch gekennzeichnet, dass** der dem Halteteil (1) zugewandte Schenkel (6, 8) eines Klemmflügels (3, 4) und das Halteteil (1) aus einem Material bestehen, das temperaturbeständiger ist als das Material des anderen Schenkels (5, 7).
